# EUROPEAN PATENT SPECIFICATION

(11) **EP 2 681 347 B1**
(45) Date of publication and mention of the grant of the patent: **09.05.2018**
(21) Application number: 12718352.3
(22) Date of filing: 05.03.2012
(51) Int. Cl.: C23C 30/00, C23C 18/12, C04B 41/52, C04B 41/00, C04B 41/89

(54) **METHOD FOR THE TREATMENT OF CERAMIC SURFACES FOR BESTOWING THEREON A HIGH HYDROPHOBICITY AND OLEOPHOBICITY**
VERFAHREN ZUR BEHANDLUNG VON KERAMISCHEN OBERFLÄCHEN ZUR VERLEIHUNG VON HOHER HYDROPHOBIE UND OLEOPHOBIE
PROCÉDÉ POUR LE TRAITEMENT DE SURFACES CÉRAMIQUES AFIN DE LEUR CONFÉRER UNE HYDROPHOBICITÉ ET UNE OLÉOPHOBICITÉ ÉLEVÉES

(30) Priority: 03.03.2011 IT RM20110104
(43) Date of publication of application: 08.01.2014
(73) Proprietor: Consiglio Nazionale Delle Ricerche, Roma (IT); Agenzia Nazionale Per Le Nuove Tecnologie, L'Energia E Lo Sviluppo Economico Sostenibile (ENEA), 00196 Roma (IT)
(72) Inventor: RAIMONDO, Mariarosa, I-47521 Cesena (IT); BEZZI, Federica, I-48010 Cotignola (IT); BLOSI, Magda, I-48026 Russi (IT); MINGAZZINI, Claudio, I-48018 Faenza (IT)
(74) Representative: Bosman, Cesare
(86) International application number: PCT/IB2012/051027
(87) International publication number: WO 2012/117386

(56) References cited:
- EP-A1- 1 142 845
- US-A1- 2003 138 661
- US-A1- 2007 065 680
- US-A1- 2010 009 177
- SERMON P A ET AL: "Fluoroalkylsilane Modification of Sol-Gel SiO2-TiO2 Coatings", JOURNAL OF SOL-GEL SCIENCE AND TECHNOLOGY, KLUWER ACADEMIC PUBLISHERS, BO, vol. 32, no. 1-3, 1 December 2004 (2004-12-01), pages 293-296, XP019212901, ISSN: 1573-4846, DOI: 10.1007/S10971-004-5805-5

## Description

### TECHNICAL FIELD

The present invention relates to a method for the treatment of ceramic surfaces for bestowing thereon a high hydrophobicity and oleophobicity, as well as to industrial ceramics comprising the surfaces treated.

### BACKGROUND ART

In the building industry, there has been for some time a considerable interest in those engineering and technological solutions that are able to bestow new features of hydrophobicity and/or oleophobicity on materials in order to guarantee that they present a built-in capacity for self-cleaning of the surfaces, with all the economic and environmental benefits that can derive therefrom.

It is known that the hydrophobicity of a surface, i.e., its degree of repellence in regard to water, depends upon the appropriate combination between the structural characteristics, in terms of dimensions of the roughness, and the energy of the surface itself, which is in turn linked to the chemism. Conventionally, a surface is defined as "hydrophobic" when the angle of contact (θ) that it forms with a drop of water is greater than 90°; the more the angle of contact θ rises above said limit value, we have progressively increasing a hydrophobicity (up to the point of superhydrophobicity).

In addition to the evaluation of the angle of static contact θ (static hydrophobicity), there are other dynamic parameters that define the hydrophobic behaviour of a surface (dynamic hydrophobicity). Dynamic hydrophobicity is linked to the capacity of a drop of water to "roll" or "run" along a surface once the angle of inclination starts to increase; it can be expressed by the minimum value of the angle of inclination that the surface must present for there to occur "rolling" or "running" of the drop. The literature in this regard testifies how the relation between static hydrophobicity and dynamic hydrophobicity is complex and, in many cases, even though the angle of static contact is sufficiently high (>150°), to this there does not correspond a sufficient dynamic hydrophobicity. This is because if the interaction of the drop with the surface depends in a more or less direct way upon the surface roughness and energy, its movement thereon is affected by additional parameters, such as physical dishomogeneities, differences of chemism and composition, size of particles, etc., the effect of which is difficult to interpret.

Another functional property of great interest for ceramic building materials is oleophobicity, i.e., repellence in regard to oils, greases, etc., which is also measured through the determination of the angle of contact that the surface forms with a drop of oil. Bestowal of this additional property on a ceramic surface enables physical prevention of adhesion of dirt and grease particles so as to enhance the self-cleaning features. The degree of oleophobicity of a surface depends markedly upon the energy of the surface itself, or rather upon the difference between the surface tension of the oily substance and the energy of the surface itself; the lower the latter, the greater the repellence of the surface to adhesion of substances with higher surface tension. The difficulty of generating oleophobic surfaces, above all on account of the need to have extremely low surface energies (< 5 MN/m), is documented in the literature [Tsujii K. et al, Angewandte Chemie-International Edition in English 1997, 36 (9), 1011-1012)].

For roughly twenty years there has been known in nature the synergy between hydrophobicity and self-cleaning properties of surfaces; the phenomenon is known as "*lotus effect*", from the name of the plant that, thanks to the surface micro/nano-structure, has an extremely marked hydrophobicity, becoming over the years the prime example to reproduce. The mechanism with which this occurs is dual: on the one hand, the micro/nano structures present bring about an increase in the available surface area of the solid, which, on the basis of Wenzel's model [Wenzel R.N., Ind. Eng. Chem. 1936, 28, 988-994] brings about a geometrical increase in the angle of contact on the surface; on the other hand, according to Cassie's model [Cassie A.B.D; Baxter S., Trans. Faraday Soc. 1944, 40, 546-551], the superhydrophobicity of a rough surface is caused by the film of air englobed underneath the drops of water deposited thereon.

However, for a real self-cleaning mechanism to be activated on the part of the surface, it is necessary for the drops of water that deposit to have then the capacity of "abandoning" the surface itself, entraining, with a mechanism of rolling or running, the particles of dirt and eliminating their residue from the surface. Consequently, for the removal of dirt to be of maximum effectiveness, running or rolling of the drops on the surface must be able to occur for small angles of inclination of the surface (a small angle of inclination is equivalent to a high dynamic hydrophobicity). In the literature, dynamic hydrophobicity is measured with reference to the behaviour of a drop of water of 30 µl.

In the last few years, particular attention has been directed to the possibility of bestowing high hydrophobicity on ceramic materials. Such an interest derives from the ever increasing awareness of the potential that ceramic products present in the various sectors of technology, and hence from the need to eliminate or at least control their propensity to accumulate dirt. For example, ceramic materials that are particularly used in the building sector (floor tiles and wall tiles for interiors, ceramic coatings for exteriors, bathrooms, etc.), in particular environmental conditions and on account of their microstructure and of the frequently porous nature, can more or less tenaciously withhold the particles of dirt, rendering costly and difficult their maintenance.

Up to the present day, the solutions for imparting on ceramic surfaces a high hydrophobicity have proven particularly complex and costly and, hence, not suitable for being applied on an industrial scale. In fact, said solutions generally call for costly materials, long preparation times, and multi-step procedures.

One example process is disclosed in EP1142845.

### DISCLOSURE OF INVENTION

The aim of the present invention is to provide ceramic surfaces presenting a high hydrophobicity and oleophobicity without thereby jeopardizing their production on an industrial scale.

Forming the subject of the present invention is a method according to claim 1. Preferably, the chelating agent is a bidentate chelating agent, more preferably ethyl acetate.

Preferably, said coating has a thickness of between 50 and 500 nm.

Preferably, in said fluorination step said coating is treated with a fluorinated compound by means of a technique of dip coating or spray coating or spin coating.

Preferably, said fluorinated compound is a fluoroalkyl silane.

### BEST MODE FOR CARRYING OUT THE INVENTION

For a better understanding of the invention appearing hereinafter are some embodiments provided purely by way of illustrative and non-limiting example.

### EXAMPLES

Described hereinafter is a method for the treatment of ceramic surfaces. The method was applied on seven different ceramic substrates designated by 1 to 7.

For each of the seven ceramic substrates there were measured the surface roughness, the angle of contact with the water and with paraffin oil (surface tension γ = 40 N/m), and the surface energy.

Table I gives the values that in terms of roughness, angle of contact, and surface energy characterize each of the seven ceramic substrates before they were subjected to the treatments below. The dynamic hydrophobicity detected on the substrates 1-7 was found to be zero in so far as the drop of water deposited was unable to abandon the respective surfaces, hence rendering non-quantifiable a minimum value of angle of inclination.

**TABLE I**

| Substrate | Mean roughness (µm) | Angle of contact with water (°) | Angle of contact with paraffin oil (°) | Surface energy (mN/m) |
|---|---|---|---|---|
| 1 | 4.7 ± 0.6 | 38 ± 3 | 34 ± 2 | 61 ± 2 |
| 2 | 0.02 ± 0.01 | 34 ± 7 | 46 ± 4 | 61 ± 2 |
| 3 | 0.3 ± 0.1 | 55 ± 11 | 33 ± 2 | 47 ± 1 |
| 4 | 1.3 ± 0.1 | 32 ± 3 | 38 ± 3 | 54 ± 2 |
| 5 | 0.3 ± 0.1 | 27 ± 4 | 33 ± 2 | 67 ± 4 |
| 6 | 0.9 ± 0.1 | 36 ± 1 | 49 ± 4 | 62 ± 2 |
| 7 | 0.1 ± 0.1 | 40 ± 3 | 32 ± 3 | 59 ± 1 |

The seven substrates of Table I were subjected to the treatments below. Described hereinafter are the procedural steps of an embodiment.

### - Preparation of the sol comprising nanoparticles of alumina (Al₂O₃)-

Preparation 1 - In an inert atmosphere a colloidal suspension 0.5M of aluminium tri-sec-butoxide (Al(O-sec-Bu)₃) in isopropyl alcohol was prepared. The suspension was kept under stirring for one hour. Then, a chelating agent was added in order to prevent formation of undesirable precipitates and guarantee homogeneity of the final suspension. The suspension was kept under stirring for three hours. Finally, to promote hydrolysis of the alkoxide a calculated amount of water was added, with consequent variation of the colour of the suspension from colourless to yellow, corresponding to the formation of dispersed nanoparticles (sol). The molar ratios of the sol were the following:
aluminium tri-sec-butoxide:isopropyl alcohol:ethyl acetate:water=1:20:1:4

Preparation 2 - A colloidal suspension of alumina was prepared by means of peptization of the aluminium isopropoxide in aqueous solution at 0.5M in the presence of nitric acid as acid catalyst. The reactions of hydrolysis and condensation that lead to the sol were obtained by keeping the system stirred at 80°C. The molar ratios of the sol were the following:
aluminium isopropoxide:water:nitric acid=1:100:0.07

### -Treatment -

Described hereinafter is a single example of treatment of the ceramic substrates in so far it was found to be absolutely immaterial whether the colloidal suspension of Al₂O₃ derived from the aforesaid preparation procedure 1 or else from the aforesaid preparation procedure 2.

In particular, the products deriving from the two types of preparation of the colloidal suspension of Al₂O₃ have demonstrated an absolute identity in terms of characteristics of hydrophobicity, oleophobicity, and surface energy.

Deposited on of each of the seven ceramic substrates was a film of Al₂O₃ in the form of sol described above. Each of the seven ceramic substrates was subjected to an operation of dip coating in the sol at a temperature of 18°C. The operation of dip coating was obtained at a rate of immersion and emersion of 120mm/min and a time of stay in the sol of 5s. Once each individual substrate emerged from the sol, the solvent, whether isopropyl alcohol or water, was evaporated by promoting the transition to the state of gel constituted by the nanoparticles of Al₂O₃ partially hydrolysed.

After the solvent had evaporated, the substrates were treated thermally in an oven at 400°C for 10 minutes in order to eliminate the organic residue and promote the densification of the coating that had formed.

To optimize adhesion between the film and the surface before deposition the substrate was preferably cleaned and activated, for example by means of acid/base chemical attack of the surfaces or other techniques.

Then, to promote the reactivity of the surface with formation of hydroxyl functional groups and modulate the surface roughness on a nanometric scale, the substrates treated were dipped in boiling water for 30 minutes and again treated thermally in an oven at 400°C for 10 minutes.

Finally, the substrates treated were subjected to a further operation of dip coating in a solution containing a fluoroalkyl silane compound. In particular, the fluorinated compound used is marketed under the name F8263 by the company EVONIK.

The operation of dip coating was carried out at a rate of immersion and emersion of 120 mm/min and a time of stay of 2 minutes.

Once the substrates treated emerged from the solution containing a fluoroalkyl-silane compound, they were kept in an oven at 150°C for 30 minutes in order to promote surface fluorination of the film of alumina.

The ceramic products obtained with the treatment described above are designated by 1t, 2t, 3t, 4t, 5t, 6t, 7t to indicate the ceramic substrates of origin. Each of the ceramic products had a transparent coating so as to be able to bestow the property sought without jeopardizing the aesthetic characteristics (patterns, decorations, etc.) present on the ceramic surfaces.

On each of the ceramic products 1t-7t the following characteristics were measured: static hydrophobicity (angle of contact with water); dynamic hydrophobicity (minimum angle of inclination of the surface at which running of a 30-µl drop of water starts); oleophobicity (angle of contact with paraffin oil); and surface energy. Table II gives the values for the aforesaid characteristics.

**TABLE II**

| Ceramic product | Static hydrophobicity (°) | Dynamic hydrophobicity (°) | Oleophobicity (°) | Surface energy (mN/m) |
|---|---|---|---|---|
| 1t | 177 ± 2 | 16 ± 2 | 121 ± 8 | 0.5 ± 0.1 |
| 2t | 145 ± 13 | 23 ± 3 | 75 ± 5 | 2.2 ± 0.3 |
| 3t | 174 ± 2 | 17 ± 2 | 118 ± 7 | 0.4 ± 0.1 |
| 4t | 144 ± 12 | 32 ± 3 | 100 ± 5 | 0.8 ± 0.2 |
| 5t | 149 ± 13 | 25 ± 2 | 98 ± 8 | 1.3 ± 0.2 |
| 6t | 142 ± 15 | 28 ± 2 | 79 ± 4 | 1.5 ± 0.3 |
| 7t | 133 ± 10 | 35 ± 4 | 102 ± 8 | 3.5 ± 0.4 |

From the values of Table II it is evident how the treatment forming the subject of the present invention makes it possible to bestow on a surface of a ceramic substrate a high hydrophobicity, both static and dynamic, together with a high oleophobicity. In particular, the substrate It presented paired values of static and dynamic hydrophobicity that are very favourable to self-cleaning; its surface presented low wettability with water (angle of static contact of 177°) and at the same time the drop started to move on the surface for very small angles of inclination (16°). Such favourable features both from the static standpoint and from the dynamic standpoint are so far today difficult to obtain on one and the same product and constitute one of the strong points of the present invention. In addition, also the repellence in regard to oils is maximum thanks to the very small values of surface energy. In summary, the treatment performed on the surfaces enables the right sizing of the roughness to be obtained, as well as the right functionality and chemical homogeneity, which, as a whole, enable products to be obtained that are simultaneously water-repellent (thanks to the high static hydrophobicity), self-cleaning (thanks to the high dynamic hydrophobicity), and oleophobic (thanks to the extremely low surface energy).

A further important advantage of the method forming the subject of the present invention is obtaining the sol of metal oxide in water. As will be immediately evident to a person skilled in the branch, the possibility of using water instead of some other type of solvent at an industrial level entails enormous advantages in terms of safety and management of production, as well as in economic terms.

The method described above was repeated on the substrate 1, modifying the temperature and the time of the steps of thermal consolidation envisaged after deposition by dip coating and after the treatment of boiling or treatment with steam. In particular, the thermal treatments were performed in the following conditions: (a) 200°C for 10m; (b) 200°C for 60m; (c) 400°C for 60m; (d) 800°C for 10m (in this case, a heating and cooling ramp of 300°C/h was used - the heating and cooling ramp that can be used is comprised in the range 100-300°C/h).

The ceramic products obtained by the treatment comprising the aforesaid modifications are designated by 1ta, 1tb, 1tc, 1td.

On each of the ceramic products 1ta-1td the characteristics of static hydrophobicity, dynamic hydrophobicity, and oleophobicity were measured, the corresponding values of which have been explained previously.

Appearing in Table III are the values for the aforesaid characteristics.

**TABLE III**

| Ceramic product | Static hydrophobicity (°) | Dynamic hydrophobicity (°) | Oleophobicity (°) |
|---|---|---|---|
| 1ta | 175 ± 5° | 34 ± 7° | 115 ± 8° |
| 1tb | 179 ± 1° | 24 ± 3° | 110 ± 7° |
| 1tc | 156 ± 6° | 23 ± 3° | 122 ± 6° |
| 1td | 170 ± 7° | 6 ± 1° | 126 ± 13° |

From the data appearing in Table III it is evident how the thermal consolidation step at 800°C (1td) guarantees excellent results both in terms of hydrophobicity and oleophobicity, in particular as regards static hydrophobicity. The minimum value of inclination required of the surface for the drop of water to start its movement thereon, and hence trigger the self-cleaning mechanism, is the lowest obtained among the substrates examined.

The ceramic products appearing in Table II and Table III were subjected to wear tests, performed simulating the standardized operating procedures in the case of coated glasses for the building sector (UNI EN 1096-2, Appendix E: Resistance-to-abrasion test) and designed to verify the grip of the treatment surface on the ceramic substrate.

The equipment consists of a rotary disk, connected through a metal arm to a rotary device, coated with a wad of abrasive felt (thickness 10mm ± 1mm) having a diameter of 5.0cm ± 0.5cm. The wad of felt turns continuously on the surface of the specimen at a rate of 60 r.p.m. The grip of the treatment to the surface was verified by measuring again after wear the angle of static contact with the water and evaluating the differences.

Appearing in Table IV are the values of angle of static contact before and after the surface-wear treatment.

**TABLE IV**

| Ceramic product | Static hydrophobicity (°) | Static hydrophobicity after wear (°) |
|---|---|---|
| 1t | 177 ± 2 | 122 ± 2° |
| 1ta | 175 ± 5° | 125 ± 5° |
| 1tb | 179 ± 1° | 124 ± 2° |
| 1tc | 156 ± 6° | 120 ± 2° |
| 1td | 170 ± 7° | 135 ± 5° |

The data show how, after the surface-wear treatment, all the surfaces maintained their characteristics of superhydrophobicity, with a drop in the value of angle of contact of approximately 30% as compared to the starting value, which in any case certifies a grip of the coating to the surface, above all in the case of the product 1td.

## Claims

1. A method for the treatment of ceramic surfaces comprising in succession:
- a deposition step, in which applied on a ceramic surface is a coating including a metal oxide comprised in the group made up of alumina, silicon dioxide, zirconium dioxide, titanium dioxide, mullite, zinc oxide, yttrium oxide, and mixtures thereof;
- a first consolidation step, in which said coating is subjected to a temperature of between 150°C and 900°C;
- a functionalization step, in which said coating is treated with boiling water and/or with steam for the production of hydroxyl groups;
- a second consolidation step, in which said coating is subjected to a temperature of between 150°C and 900°C;
- a fluorination step, in which said coating is treated with a fluorinated compound;
- a third consolidation step, in which said coating is subjected to a temperature of between 50°C and 300°C;
said deposition step envisaging the use of a sol obtained starting from a colloidal suspension by means of hydrolysis and condensation of one or more metal alkoxides M(OR)n in the presence of water
wherein:
M is comprised in the group made up of Al, Ti, Si, Y, Zn, Zr; and
R is a linear or branched aliphatic chain C1-C4; said sol is deposited by means of a technique chosen in the group constituted by dip coating, spray coating, and spin coating
said method being **characterized in that** said colloidal suspension is obtained in water, dispersed in which is a chelating agent designed to chelate the metal of the alkoxide.

2. The method for the treatment of ceramic surfaces according to Claim 1, **characterized in that** said chelating agent is a bidentate chelating agent.

3. The method for the treatment of ceramic surfaces according to claim 1, **characterized in that** said coating has a thickness of between 50 and 500nm.

4. The method for the treatment of ceramic surfaces according to any one of the preceding claims, **characterized in that** in said fluorination step said coating is treated with a fluorinated compound by means of a technique of dip coating or spray coating or spin coating.

5. The method for the treatment of ceramic surfaces according to Claim 4, **characterized in that** said fluorinated compound is a fluoroalkyl silane.

## Patentansprüche

1. Ein Verfahren zur Behandlung von keramischen Oberflächen, umfassend in Folge:
- einen Abscheidungsschritt, in welchem auf eine keramische Oberfläche eine Beschichtung umfassend ein Metalloxid enthalten in der Gruppe bestehend aus Aluminium, Siliziumdioxid, Zirconiumdioxid, Titaniumdioxid, Mullit, Zinkoxid, Yttriumoxid und Mischungen davon;
- einen erster Konsolidierungsschritt, in welchem die Beschichtung einer Temperatur von zwischen 150°C und 900°C ausgesetzt wird;
- einen Funktionalisierungsschritt, in welchem die Beschichtung zur Erzeugung von Hydroxylgruppen mit kochendem Wasser und/oder mit Dampf behandelt wird;
- einen zweiten Konsolidierungsschritt, in welchem die Beschichtung einer Temperatur von zwischen 150°C und 900°C ausgesetzt wird;
- einen Fluorierungsschritt, in welchem die Beschichtung mit einer fluorierten Verbindung behandelt wird;
- einen dritten Konsolidierungsschritt, in welchem die Beschichtung einer Temperatur von zwischen 50°C und 300°C ausgesetzt wird;
wobei der Abscheidungsschritt die Verwendung eines Sol erhalten ausgehend von einer kolloidalen Suspension mittels Hydrolyse und Kondensation von einem oder mehreren Metallalkoxiden M(OR)n in Gegenwart von Wasser vorsieht,
wobei:
M in der Gruppe bestehend aus Al, Ti, Si, Y, Zn, Zr; und R eine lineare oder verzweigte aliphatische C1-C4-Kette ist; das Sol mittels einer Technik ausgewählt aus der Gruppe bestehend aus Tauchbeschichten, Sprühbeschichten und Schleuderbeschichten abgeschieden wird, wobei das Verfahren **dadurch gekennzeichnet ist, dass** die kolloidale Suspension in Wasser erhalten wird, in welchem ein Chelatisierungsmittel dispergiert ist, welches zum Chelatisieren des Metalls des Alkoxids ausgestaltet ist.

2. Das Verfahren zur Behandlung von keramischen Oberflächen gemäß Anspruch 1, **dadurch gekennzeichnet, dass** das Chelatisierungsmittel ein zweizähniges Chelatisierungsmittel ist.

3. Das Verfahren zur Behandlung von keramischen Oberflächen gemäß Anspruch 1, **dadurch gekennzeichnet, dass** die Beschichtung eine Dicke von zwischen 50 und 500 nm aufweist.

4. Das Verfahren zur Behandlung von keramischen Oberflächen gemäß einem der vorhergehenden Ansprüche, **dadurch gekennzeichnet, dass** die Beschichtung in dem Fluorierungsschritt mit einer fluorierten Verbindung mittels einer Tauchbeschichtungs- oder Sprühbeschichtungs- oder Schleuderbeschichtungstechnik behandelt wird.

5. Das Verfahren zur Behandlung von keramischen Oberflächen gemäß Anspruch 4, **dadurch gekennzeichnet, dass** die fluorierte Verbindung ein Fluoralkylsilan ist.

## Revendications

1. Procédé pour le traitement de surfaces céramiques comprenant successivement :
- une étape de dépôt, dans laquelle un revêtement comprenant un oxyde métallique compris dans le groupe composé de l'alumine, du dioxyde de silicium, du dioxyde de zirconium, du dioxyde de titane, de la mullite, de l'oxyde de zinc, de l'oxyde d'yttrium et des mélanges de ceux-ci, est appliqué sur une surface céramique ;
- une première étape de consolidation, dans laquelle ledit revêtement est soumis à une température comprise entre 150 C et 900 C ;
- une étape de fonctionnalisation, dans laquelle ledit revêtement est traité avec de l'eau bouillante et/ou avec de la vapeur d'eau pour la production de groupes hydroxyle ;
- une deuxième étape de consolidation, dans laquelle ledit revêtement est soumis à une température comprise entre 150 C et 900 C ;
- une étape de fluoration, dans laquelle ledit revêtement est traité avec un composé fluoré ;
- une troisième étape de consolidation, dans laquelle ledit revêtement est soumis à une température comprise entre 50 C et 300 C ;
ladite étape de dépôt prévoyant l'utilisation d'un sol obtenu à partir d'une suspension colloïdale au moyen de l'hydrolyse et de la condensation d'un ou plusieurs alcoolates métalliques M(OR)ₙ en présence d'eau dans lequel :
M est compris dans le groupe de Al, Ti, Si, Y, Zn, Zr ; et
R est une chaîne aliphatique en C1-C4 linéaire ou ramifiée ; ledit sol est déposé au moyen d'une technique choisie dans le groupe du revêtement au trempé, le revêtement par pulvérisation et le revêtement par centrifugation,
ledit procédé étant **caractérisé en ce que** ladite suspension colloïdale est obtenue dans de l'eau, dans laquelle est dispersé un agent chélatant conçu pour chélater le métal de l'alcoolate.

2. Procédé pour le traitement de surfaces céramiques selon la revendication 1, **caractérisé en ce que** ledit agent chélatant est un agent chélatant bidentate.

3. Procédé pour le traitement de surfaces céramiques selon la revendication 1, **caractérisé en ce que** ledit revêtement a une épaisseur comprise entre 50 et 500 nm.

4. Procédé pour le traitement de surfaces céramiques selon l'une quelconque des revendications précédentes, **caractérisé en ce que** dans ladite étape de fluoration ledit revêtement est traité avec un composé fluoré au moyen d'une technique de revêtement au trempé ou de revêtement par pulvérisation ou de revêtement par centrifugation.

5. Procédé pour le traitement de surfaces céramiques selon la revendication 4, **caractérisé en ce que** ledit composé fluoré est un fluoroalkylsilane.
